# EUROPEAN PATENT APPLICATION

(11) **EP 4 096 225 A1**
(43) Date of publication of application: **30.11.2022**
(21) Application number: 22165604.4
(22) Date of filing: 30.03.2022
(51) Int. Cl.: H04N 21/2187, H04N 21/8547, H04N 21/4788, H04N 21/43, H04N 21/658, H04N 21/482

(54) **METHOD AND APPARATUS FOR DISPLAYING LIVE BROADCAST CLIP**

(30) Priority: 25.05.2021 CN 202110571774
(71) Applicant: Beijing Dajia Internet Information Technology Co., Ltd., Beijing 100085 (CN)
(72) Inventor: ZHANG, Haowen, Beijing 100085 (CN); TAN, Peiqiang, Beijing 100085 (CN)
(74) Representative: advotec.

(57) **Abstract**

A method and apparatus for displaying a live broadcast clip. The method includes: receiving a first sharing live broadcast clip signaling sent by a first client; searching an identifier of a live broadcast room in a first mapping relationship table based on the identifier of the live broadcast clip; searching attribute information of the live broadcast room in a second mapping relationship table based on the identifier of the live broadcast room; generating a first sharing card based on the identifier of the live broadcast clip, the identifier of the live broadcast room, and the attribute information of the live broadcast room; and sending the first sharing card to the first client. The present disclosure realizes the sharing of the highlight live broadcast clip with users of clients except for the live broadcast client, thereby expanding the display range of the highlight live broadcast clip.

## Description

### FIELD

The present disclosure relates to the field of computer technology, and in particular to a method, an apparatus, an electronic device and a storage medium for displaying a live broadcast clip.

### BACKGROUND

With the continuous development of science and technology, mobile Internet has penetrated into people's daily life and played an important role. More and more people use live broadcasts to share life and convey information. The highlight moments in the live broadcast are often favored by users. The display of the highlight moments in the live broadcast has become an indispensable and important content for enhancing the user experience. In addition, being able to share highlight moments with people outside the live broadcast client has become one of the user needs that cannot be ignored in the current market.

### SUMMARY

The present disclosure provides a method and apparatus for displaying a live broadcast clip, the technical solutions of the present disclosure are described as follows.

In some embodiments, there is provided a method for displaying a live broadcast clip. The method includes: receiving a first sharing live broadcast clip signaling sent by a first client, the first sharing live broadcast clip signaling including an identifier of the live broadcast clip; searching an identifier of a live broadcast room in a first mapping relationship table based on the identifier of the live broadcast clip, in which the first mapping relationship table is pre-stored and includes a first mapping relationship between the identifier of the live broadcast clip and the identifier of the live broadcast room; searching attribute information of the live broadcast room in a second mapping relationship table based on the identifier of the live broadcast room, in which the second mapping relationship table is pre-stored and includes a second mapping relationship between the identifier of the live broadcast room and the attribute information of the live broadcast room; generating a first sharing card based on the identifier of the live broadcast clip, the identifier of the live broadcast room, and the attribute information of the live broadcast room; and sending the first sharing card to the first client, the first sharing card is configured to share the live broadcast clip to a second client to enable the second client to display the live broadcast clip based on the first sharing card.

In some embodiments, the method also includes: receiving first request information sent by the second client, the first request information including the identifier of the live broadcast clip, and the first request information being generated by the second client in response to a display operation for the first sharing card; acquiring the live broadcast clip corresponding to the identifier of the live broadcast clip, the live broadcast clip including an identifier of a live broadcast stream and a timestamp of the live broadcast clip; acquiring an interactive message in a first format corresponding to the identifier of the live broadcast clip, the interactive message in the first format including the identifier of the live broadcast stream and a timestamp of the interactive message in the first format, and the interactive message in the first format being generated by performing format conversion on an interactive message in a second format in a live broadcast video; and sending the live broadcast clip and the interactive message in the first format to the second client, to enable the second client to display the live broadcast clip and the interactive message in the first format based on the identifier of the live broadcast stream, the timestamp of the live broadcast clip and the timestamp of the interactive message in the first format.

In some embodiments, the first request information further includes the identifier of the live broadcast room, and the method includes: acquiring information on an anchor corresponding to the live broadcast room based on the identifier of the live broadcast room; determining a live broadcast state of the anchor based on the information on the anchor; sending the live broadcast state of the anchor to the second client, to enable the second client to switch to the live broadcast room corresponding to the identifier of the live broadcast room or a live broadcast ending page in response to a switching selection instruction inputted by the user based on the live broadcast state of the anchor after displaying the live broadcast clip and the interactive message in the first format.

In some embodiments, the method also includes: receiving a second sharing live broadcast clip signaling sent by the second client, the second sharing live broadcast clip signaling including the identifier of the live broadcast clip; generating interface information of a second sharing card based on the attribute information of the live broadcast room corresponding to the identifier of the live broadcast clip; and sending the interface information of the second sharing card to the second client, to enable the second client to generate the second sharing card based on the identifier of the live broadcast clip, the identifier of the live broadcast room and the interface information.

In some embodiments, the method also includes: sending a live broadcast clip push message including the identifier of the live broadcast clip to the first client, to enable the first client to generate the first sharing live broadcast clip signaling based on the identifier of the live broadcast clip.

In some embodiments, acquiring the live broadcast clip corresponding to the identifier of the live broadcast clip includes: searching the live broadcast clip in a third mapping relationship table based on the identifier of the live broadcast clip, in which the third mapping relationship table is pre-stored and includes a third mapping relationship between the identifier of the live broadcast clip and the live broadcast clip.

In some embodiments, the method also includes: acquiring the live broadcast clip in the live broadcast video; generating the identifier of the live broadcast clip; establishing the third mapping relationship between the identifier of the live broadcast clip and the live broadcast clip.

In some embodiments, the method also includes: acquiring the identifier of the live broadcast room corresponding to the live broadcast video; establishing the first mapping relationship between the identifier of the live broadcast clip and the identifier of the live broadcast room.

In some embodiments, acquiring the interactive message corresponding to the identifier of the live broadcast clip includes: searching the interactive message in the first format in a fourth mapping relationship table based on the identifier of the live broadcast clip, in which the fourth mapping relationship table is pre-stored and includes a fourth mapping relationship between the identifier of the live broadcast clip and the interactive message in the first format.

In some embodiments, the method also includes: receiving a live broadcast clip message including the identifier of the live broadcast clip, the identifier of the live broadcast stream, and the timestamp of the live broadcast clip; acquiring the interactive message in the second format of the live broadcast clip based on the identifier of the live broadcast stream and the timestamp of the live broadcast clip; performing the format conversion on the interactive message in the second format of the live broadcast clip to acquire the interactive message in the first format; establishing the fourth mapping relationship between the identifier of the live broadcast clip and the interactive message in the first format.

In some embodiments, the method also includes: acquiring the interactive message in the second format in the live broadcast video; and storing the interactive message in the second format.

In some embodiments, there is provided a method for displaying a live broadcast clip. The method includes: receiving a first sharing card sent by a first client, the first sharing card being generated based on an identifier of the live broadcast clip, an identifier of a live broadcast room corresponding to the identifier of the live broadcast clip, and attribute information of the live broadcast room corresponding to the identifier of the live broadcast room; and displaying the live broadcast clip based on the first sharing card.

In some embodiments, there is provided a method for displaying a live broadcast clip. The method includes: sending a first sharing live broadcast clip signaling including an identifier of the live broadcast clip; receiving a first sharing card, the first sharing card being generated based on the identifier of the live broadcast clip, an identifier of a live broadcast room corresponding to the identifier of the live broadcast clip, and attribute information of the live broadcast room corresponding to the identifier of the live broadcast room; and sending the first sharing card to a second client, to enable the second client to display the live broadcast clip based on the first sharing card.

In some embodiments, there is provided an apparatus for displaying a live broadcast clip. The apparatus includes: a first receiving module, configured to receive a first sharing live broadcast clip signaling sent by a first client, the first sharing live broadcast clip signaling including an identifier of the live broadcast clip; a first search module, configured to search an identifier of a live broadcast room in a first mapping relationship table based on the identifier of the live broadcast clip, in which the first mapping relationship table is pre-stored and includes a first mapping relationship between the identifier of the live broadcast clip and the identifier of the live broadcast room; a second search module, configured to search attribute information of the live broadcast room in a second mapping relationship table based on the identifier of the live broadcast room, in which the second mapping relationship table is pre-stored and includes a second mapping relationship between the identifier of the live broadcast room and the attribute information of the live broadcast room; a first generating module, configured to generate a first sharing card based on the identifier of the live broadcast clip, the identifier of the live broadcast room, and the attribute information of the live broadcast room; and a first sending module, configured to send the first sharing card to the first client, the first sharing card is configured to share the live broadcast clip to a second client to enable the second client to display the live broadcast clip based on the first sharing card.

In some embodiments, there is provided an apparatus for displaying a live broadcast clip. The apparatus includes: a fourth receiving module, configured to receive a first sharing card sent by a first client, the first sharing card being generated based on an identifier of the live broadcast clip, an identifier of a live broadcast room corresponding to the identifier of the live broadcast clip, and attribute information of the live broadcast room corresponding to the identifier of the live broadcast room; a displaying module, configured to display the live broadcast clip based on the first sharing card.

The technical solution provided by the embodiments of the present disclosure brings at least the following beneficial effects: the server obtains the identifier of the live broadcast room corresponding to the identifier of the live broadcast clip based on the identifier of the live broadcast clip in the first live broadcast sharing signaling sent by the first client, and obtains the attribute information of the live broadcast room based on the identifier of the live broadcast room, and generates the first sharing card and send it to the first client. The user can send the first sharing card to the second client as required, so that the second client can display the live broadcast clip based on the first sharing card, and at the same time, the user of the second client can send the second sharing live broadcast clip signaling to the server, and obtain the interface information of the second sharing card, so as to generate the second sharing card, thereby realizing the sharing of live broadcast clips between different clients, and expanding the display range of the live broadcast clips.

It should be understood that the above general description and the following detailed description are only exemplary and explanatory, and may not limit the disclosure.

### BRIEF DESCRIPTION OF THE DRAWINGS

Fig. 1 is a flowchart showing a method for displaying a live broadcast clip based on an embodiment.
Fig. 2 is a flowchart showing a server sending a live broadcast clip and a corresponding interactive message in a first format to a second client in a method for displaying a live broadcast clip based on an embodiment.
Fig. 3 is a flowchart showing a server determining a live broadcast state of an anchor and sending the live broadcast state of the anchor to a second client in a method for displaying a live broadcast clip based on an embodiment.
Fig. 4 is a flowchart showing a server generating interface information of a second sharing card and sending the second sharing card to a second client in a method for displaying a live broadcast clip based on an embodiment.
Fig. 5 is a flowchart of establishing a third mapping relationship in a method for displaying a live broadcast clip based on an embodiment.
Fig. 6 is a flowchart of establishing a first mapping relationship in a method for displaying a live broadcast clip based on an embodiment.
Fig. 7 is a flowchart of establishing a fourth mapping relationship in a method for displaying a live broadcast clip based on an embodiment.
Fig. 8 is a flowchart of acquiring and storing an interactive message in a second format in a method for displaying a live broadcast clip based on an embodiment.
Fig. 9 is a flowchart showing a method for displaying a live broadcast clip based on another embodiment.
Fig. 10 is a flowchart showing a second client displaying a live broadcast clip based on a first sharing card in a method for displaying a live broadcast clip based on another embodiment.
Fig. 11 is a flowchart showing a second client executing a switching instruction for a live broadcast room or a live broadcast clip ending page in a method for displaying a live broadcast clip based on another embodiment.
Fig. 12 is a flowchart of a second client generating a second sharing card in a method for displaying a live broadcast clip based on another embodiment.
Fig. 13 is a flowchart showing a method for displaying a live broadcast clip based on another embodiment.
Fig. 14 is a flowchart showing a first client generating a first sharing live broadcast clip signaling in a method for displaying a live broadcast clip based on another embodiment.
Fig. 15 is a signaling interaction diagram showing a method for displaying a live broadcast clip based on an embodiment.
Fig. 16 is a block diagram showing an apparatus for displaying a live broadcast clip based on an embodiment.
Fig. 17 is a block diagram showing an apparatus for displaying a live broadcast clip based on another embodiment.
Fig. 18 is a block diagram showing an apparatus for displaying a live broadcast clip based on another embodiment.
Fig. 19 is a block diagram showing an electronic device for displaying a live broadcast clip based on an embodiment.

### DETAILED DESCRIPTION

In order to enable those skilled in the art to understand the technical solutions of the present disclosure, reference will be made clearly and completely technical solutions in the embodiments of the present disclosure with accompanying drawings.

It should be noted that terms "first" and "second" in the specification and claims of the present disclosure and the accompanying drawings are used to distinguish similar objects, rather than to describe a specific order or sequence. It should be understood that data used in such a manner may be interchanged under appropriate circumstances so that embodiments of the present disclosure described herein may be implemented in a sequence other than the sequence illustrated or described herein. The implementations described in the following embodiments do not represent all implementations consistent with the present disclosure; instead, the implementations described in the following embodiments are merely examples of an apparatus and method consistent with the attached claims and some aspects of the present disclosure.

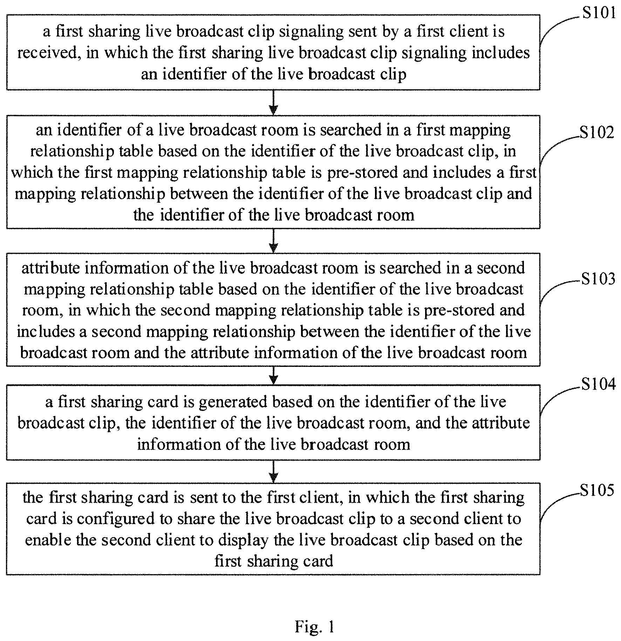

Fig. 1 is a flowchart showing a method for displaying a live broadcast clip based on an embodiment. As shown in Fig. 1, the method for displaying a live broadcast clip can be applied to the server and includes the following steps S101-S105.

In step S101, a first sharing live broadcast clip signaling sent by a first client is received, in which the first sharing live broadcast clip signaling includes an identifier of the live broadcast clip.

It should be noted that an executive object of the method for displaying a live broadcast clip in the embodiments of the present disclosure is an apparatus for displaying a live broadcast clip provided on the server in the embodiments of the present disclosure, in which the server may include a live broadcast server, a sharing server, a highlight moment server, an interactive message server, and an audio/video server, and may also be an integral server including functions of the above-mentioned server.

The client refers to an application, a web page, or a terminal device that provide services by the server. For example, if the server of the present disclosure is a server of a short video application, the client is all the short video applications installed on the user's terminal device, or a web page, an application, etc. which are used by a manager or a developer of the short video application to manage and maintain the short video application, which are not limited in the embodiments of the present disclosure. The first client is a client used by a user who has entered the live broadcast room.

In embodiments of the present disclosure, the first client sends the first sharing live broadcast clip signaling to the server, and the server may receive the first sharing live broadcast clip signaling sent by the first client in real time. The first sharing live broadcast clip signaling may specifically include, but is not limited to, an identifier of the live broadcast clip, etc., which is used to request to obtain the live broadcast clip corresponding to the identifier of the live broadcast clip and attribute information of the live broadcast room corresponding to the live broadcast clip. The identifier of the live broadcast clip is used to mark the uniqueness of the live broadcast clip, such as an ID (Identity Document) of the live broadcast clip.

In step S 102, an identifier of a live broadcast room is searched in a first mapping relationship table based on the identifier of the live broadcast clip, in which the first mapping relationship table is pre-stored and includes a first mapping relationship between the identifier of the live broadcast clip and the identifier of the live broadcast room.

In the embodiment of the present disclosure, the first mapping relationship table including the first mapping relationship between identifiers of multiple live broadcast clips and identifiers of the live broadcast room is pre-stored. The server searches for the identifier of the live broadcast room corresponding to the identifier of the above-mentioned live broadcast clip in the first mapping relationship table based on the identifier of the live broadcast clip in the first sharing live broadcast clip signaling received in step S101.

In step S103, attribute information of the live broadcast room is searched in a second mapping relationship table based on the identifier of the live broadcast room, in which the second mapping relationship table is pre-stored and includes a second mapping relationship between the identifier of the live broadcast room and the attribute information of the live broadcast room.

In the embodiment of the present disclosure, the second mapping relationship table including the second mapping relationship between identifiers of the multiple live broadcast rooms and the attribute information of the corresponding live broadcast rooms is pre-stored. The server searches for the attribute information of the live broadcast room corresponding to the identifier of the live broadcast room in the second mapping relationship table based on the identifier of the live broadcast room acquired in step S102. The attribute information of the live broadcast room may specifically include, but is not limited to, the number of viewers in the live broadcast room and a category of live broadcast content, such as music, cuisine, etc., which is not limited herein.

In step S104, a first sharing card is generated based on the identifier of the live broadcast clip, the identifier of the live broadcast room, and the attribute information of the live broadcast room.

In the embodiment of the present disclosure, the server generates the first sharing card based on the identifier of the live broadcast clip, the identifier of the live broadcast room acquired in step S102, and the attribute information of the live broadcast room acquired in step S103.

In step S105, the first sharing card is sent to the first client, in which the first sharing card is configured to share the live broadcast clip to a second client to enable the second client to display the live broadcast clip based on the first sharing card.

In the embodiment of the present disclosure, the second client is a client used by a user who has not entered the live broadcast room. The server sends the first sharing card generated in step S104 to the first client. The first client sends the first sharing card to the second client, and the second client acquires the live broadcast clip from the server based on the first sharing card, thereby realizing the sharing of live broadcast clip between different clients, and expanding display scope of the live broadcast clip. The first sharing card includes, but is not limited to, a uniform resource locator (URL), a title, a description, and a cover of the first sharing card, which will not be limited in the present disclosure.

With the method for displaying a live broadcast clip provided by the embodiments of the present disclosure, the server acquires the identifier of the live broadcast room corresponding to the identifier of the live broadcast clip based on the identifier of the live broadcast clip in the first live broadcast sharing signaling sent by the first client, acquires the attribute information of the live broadcast room based on the identifier of the live broadcast room, generates and sends the first sharing card. Therefore, the user may send the first sharing card to the second client as needed, so that the second client can display the live broadcast clip based on the first sharing card, thereby realizing the sharing of a live broadcast clip among different clients and expanding the display range of the live broadcast clip.

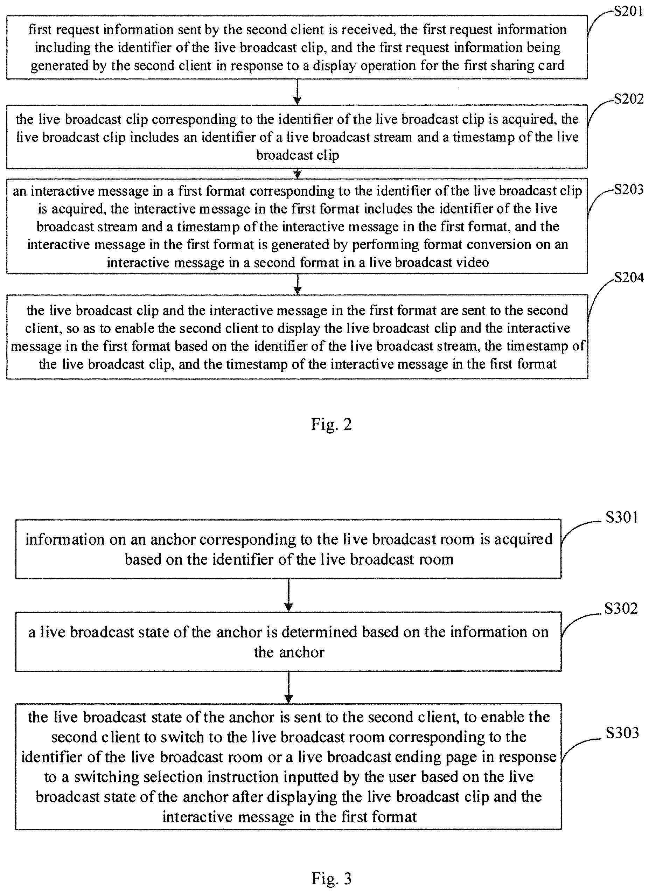

In some embodiments, as shown in Fig. 2, the method for displaying a live broadcast clip in the embodiment of the present disclosure may further include followings steps S201-S204.

In step S201, first request information sent by the second client is received, the first request information including the identifier of the live broadcast clip, and the first request information being generated by the second client in response to a display operation for the first sharing card.

In the embodiment of the present disclosure, the second client terminal generates the first request information based on the user's operation on the first sharing card. It is not difficult to understand that the user can choose whether to display the live broadcast clip corresponding to the first sharing card by browsing the cover of the first sharing card and other information. In specific implementation, the user can click the sharing URL in the first sharing card to instruct the second client to send the first request information to the server based on this operation. The server acquires the live broadcast clip corresponding to the identifier of the live broadcast clip and the interaction information in the first format based on the identifier of the live broadcast clip in the received first request information sent by the second server.

In step S202, the live broadcast clip corresponding to the identifier of the live broadcast clip is acquired, the live broadcast clip includes an identifier of a live broadcast stream and a timestamp of the live broadcast clip.

In the embodiments of the present disclosure, the server obtains the live broadcast clip corresponding to the identifier of the live broadcast clip according to the identifier of the live broadcast clip in the first request information received in step S201, in which the live broadcast clip may specifically include, but is not limited to, an identifier of a live broadcast stream to which the live broadcast clip belongs and a timestamp of the live broadcast clip, etc. The live broadcast clip may be a highlight clip in the live broadcast video specified by the user, or it may be a highlight clip determined by a system according to an interaction situation in the live broadcast room, for example, a corresponding clip when there are more interactive messages and better interaction conditions.

In step S203, an interactive message in a first format corresponding to the identifier of the live broadcast clip is acquired, the interactive message in the first format includes the identifier of the live broadcast stream and a timestamp of the interactive message in the first format, and the interactive message in the first format is generated by performing format conversion on an interactive message in a second format in a live broadcast video.

In the embodiment of the present disclosure, the server obtains the interactive message in the first format corresponding to the identifier of the live broadcast clip according to the identifier of the live broadcast clip in the first request information received in step S201, in which the interactive message in the first format may specifically include, but is not limited to, an identifier of a live broadcast stream to which the live broadcast clip belongs and a timestamp of the interactive message, etc. Since the interactive message in the second format in the live broadcast video cannot be displayed on the second client, the interactive message in the first format is generated by format conversion based on the interactive message in the second format in the live broadcast video. For example, the first format may be the fifth generation version (H5) of the hierarchical format, which is not too limited in the present disclosure. Through the format conversion, the interactive message can be displayed simultaneously with the live broadcast clip on the second client, which enhances the display effect.

In step S204, the live broadcast clip and the interactive message in the first format are sent to the second client, so as to enable the second client to display the live broadcast clip and the interactive message in the first format based on the identifier of the live broadcast stream, the timestamp of the live broadcast clip, and the timestamp of the interactive message in the first format.

In the embodiment of the present disclosure, the server sends the live broadcast clip obtained in step S202 and the interactive message obtained in step S203 to the second client, and the second client receives the live broadcast clip and the interactive message in the first format, and synchronously display the live broadcast clip and the interactive message in the first format based on the identifier of the live broadcast stream, the timestamp of the live broadcast clip and the timestamp of the interactive message in the first format contained in the live broadcast clip and the interactive message in the first format. As a result, the user of the second client may browse interactive messages in the live broadcast clip in real time while watching the live broadcast clip on the client, which improves the display effect and enhances the user experience. It should be noted that, in the embodiments of the present disclosure, the identifier of the live broadcast stream in the live broadcast clip obtained by the second client is same as the identifier of the live broadcast stream in the interactive message in the first format, such that the live broadcast clip and interactive information in the first format may be synchronous displayed. In specific implementation, users may choose whether to close the display of interactive messages as needed.

Therefore, the server obtains the live broadcast clip and interactive message in the first format corresponding to the identifier of the live broadcast clip according to the identifier of the live broadcast clip in the first request information sent by the second client, and sends them to the second client. The second client displays the live broadcast clip and the interactive message in the first format corresponding to the live broadcast clip according to the identifier of the live broadcast stream, the timestamp of the live broadcast clip, and the timestamp of the interactive message. The server may respond to the second client's request in a timely manner so that the second client may display the live broadcast clip and interactive messages synchronously, thereby realizing the real-time display of the highlight live broadcast clips. By aligning the timestamps, the corresponding interactive message may be displayed while displaying the highlight live broadcast clip, which realizes sharing of the live broadcast clip among different clients and improving the display effect.

In some embodiments, as shown in Fig. 3, the first request information also includes the identifier of the live broadcast room. The method for displaying a live broadcast clip in the embodiment of the present disclosure may further include following steps S301-S303.

In step S301, information on an anchor corresponding to the live broadcast room is acquired based on the identifier of the live broadcast room.

In the embodiment of the present disclosure, the server acquires information on the corresponding anchor of the live broadcast room from the database or cache based on the identifier of the live broadcast room in the first request information sent by the second client. For example, the information of the anchor may include a gender of the anchor and a duration of the live broadcast, etc., which is not limited in the present disclosure.

In step S302, a live broadcast state of the anchor is determined based on the information on the anchor.

In the embodiment of the present disclosure, the state of the anchor is determined based on the information of the anchor acquired in step S301, in which the live broadcast state of the anchor may be whether the live broadcast is in progress.

In step S303, the live broadcast state of the anchor is sent to the second client, to enable the second client to switch to the live broadcast room corresponding to the identifier of the live broadcast room or a live broadcast ending page in response to a switching selection instruction inputted by the user based on the live broadcast state of the anchor after displaying the live broadcast clip and the interactive message in the first format.

In the embodiment of the present disclosure, the server sends the live broadcast state of the anchor determined in step S302 to the second client, and after the user of the second client display the live broadcast clip and the interactive message in the first format based on the live broadcast state of the anchor, the switching selection instruction is inputted, and the second client responds to the instruction and switches to the live broadcast room or the live broadcast ending page corresponding to the identifier of the live broadcast room. For example, when the anchor is in a live broadcast state (the live broadcast is in progress), the second client terminal jumps to the live broadcast room corresponding to the identifier of the live broadcast room. When the anchor is in a non-live broadcast state (the live broadcast is not in progress), the second client jumps to the live broadcast room corresponding to the identifier of the live broadcast room.

Thus, the method establishes the association between the live broadcast clip and the live broadcast room, so that the user of the second client can choose whether to enter the live broadcast room corresponding to the live broadcast clip to continue watching the live broadcast as needed after watching the live broadcast clip, or jump to the live broadcast ending page, thus enhancing the user experience.

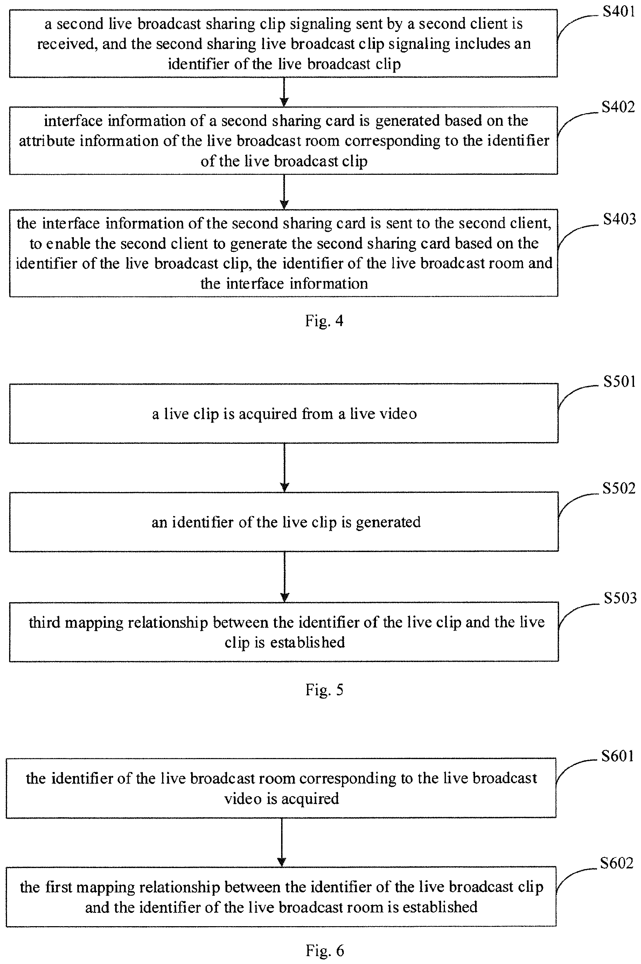

In some embodiments, as shown in Fig. 4, the method for displaying a live broadcast clip in the embodiment of the present disclosure may further include followings steps S401-S403.

In step S401, a second live broadcast sharing clip signaling sent by a second client is received, and the second sharing live broadcast clip signaling includes an identifier of the live broadcast clip.

In the embodiment of the present disclosure, the user of the second client may share the live broadcast clip as needed after displaying the live broadcast clip and the interactive message in the first format, and the second client sends the second shared live broadcast clip signaling to the server in response to the user's sharing instruction of the live broadcast clip, the server receives the second shared live broadcast clip signaling sent by the client in real time, in which the second shared live broadcast clip signaling includes but is not limited to the identifier of the live broadcast clip.

In step S402, interface information of a second sharing card is generated based on the attribute information of the live broadcast room corresponding to the identifier of the live broadcast clip.

In the embodiment of the present disclosure, the server acquires the attribute information of the corresponding live broadcast room based on the identifier of the live broadcast clip in the received second live broadcast sharing signaling. The specific process is similar to the foregoing embodiment, and will not be repeated here. The server generates the interface information of the second sharing card based on the attribute information of the live broadcast room. The interface information of the second sharing card includes but is not limited to a title, a description and a cover of the live broadcast clip.

In step S403, the interface information of the second sharing card is sent to the second client, to enable the second client to generate the second sharing card based on the identifier of the live broadcast clip, the identifier of the live broadcast room and the interface information.

In the embodiment of the present disclosure, the server sends the interface information of the second sharing card generated in step S402 to the second client. The second client generates the second sharing card based on the identifier of the live broadcast clip, the identifier of the live broadcast room and the interface information. It should be noted that the second sharing card may be a new sharing card different from the first sharing card.

In this way, the second client user can acquire the interface information of the second sharing card by sending the second sharing live broadcast clip signaling to the server, thereby generating the second sharing card, which is convenient for users of different clients to share and display the highlight live broadcast clips based on their needs, thereby expanding the display range of a live broadcast clip.

In some embodiments, the method for displaying a live broadcast clip in the embodiments of the present disclosure may further include: sending a live broadcast clip push message including the identifier of the live broadcast clip to the first client, to enable the first client to generate the first sharing live broadcast clip signaling based on the identifier of the live broadcast clip.

In the embodiment of the present disclosure, the server can send a live broadcast clip push message to the first client, the first client receives the live broadcast clip push message, and the user of the first client can choose whether to view the pushed live broadcast clip as needed, thereby enhancing users experience. The live broadcast clip push message sent to the first client includes the identifier of the live broadcast clip, and the first client may generate the first sharing live broadcast clip signaling based on the identifier of the live broadcast clip in the live broadcast clip push message.

In some embodiments, acquiring the live broadcast clip corresponding to the identifier of the live broadcast clip in step S202 may further include: searching the live broadcast clip in a third mapping relationship table based on the identifier of the live broadcast clip, in which the third mapping relationship table is pre-stored and includes a third mapping relationship between the identifier of the live broadcast clip and the live broadcast clip.

In the embodiment of the present disclosure, the third mapping relationship table including the third mapping relationship between the identifiers of multiple live broadcast clips and the live broadcast clips is stored in advance. When acquiring the live broadcast clip, the server can find the live broadcast clip corresponding to the identifier of the live broadcast clip in the third mapping table in time based on the identifier of the live broadcast clip.

In some embodiments, as shown in Fig. 5, the method for displaying a live broadcast clip in the embodiment of the present disclosure may further include followings steps S501-S503.

In step S501, a live clip is acquired from a live video.

In the embodiments of the present disclosure, the server acquires a live clip in the live video in the live broadcast room, for example, a highlight in the live video. It should be noted that the acquired live clip includes the identifier of the live stream and the timestamp of the live clip.

In step S502, an identifier of the live clip is generated.

In the embodiments of the present disclosure, the server generates a corresponding identifier for the live clip obtained in step S501, that is, generates the identifier of the live clip.

In step S503, third mapping relationship between the identifier of the live clip and the live clip is established.

In the embodiment of the present disclosure, the third mapping relationship between the identifier of the live clip and the live clip is established according to the live clip obtained in step S501 and the identifier of the live clip generated in step S502.

Therefore, when the server receives the first request information sent by the second client, the corresponding live clip may be searched in the third mapping relationship table according to the identifier of the live clip in the first request information, such that the live clip may be provided to the user in time, thus enhancing the user experience and stickiness.

In some embodiments, as shown in Fig. 6, the method for displaying a live broadcast clip in the embodiment of the present disclosure may further include followings steps S601-S602.

In step S601, the identifier of the live broadcast room corresponding to the live broadcast video is acquired.

In step S602, the first mapping relationship between the identifier of the live broadcast clip and the identifier of the live broadcast room is established.

It should be noted here that the above explanation of the embodiment of the method for displaying a live broadcast clip is also applicable to the method for displaying a live broadcast clip of the embodiments of the present disclosure, and the specific process will not be repeated here.

Therefore, the method generates and stores the first mapping relationship table of the first mapping relationship between the identifiers of the multiple live broadcast clips and the identifiers of the live broadcast room, so that the server can find the identifier of the live broadcast room based on the identifier of the live broadcast clip.

In some embodiments, acquiring the interactive message corresponding to the identifier of the live broadcast clip in step S203 may also include: searching the interactive message in the first format in a fourth mapping relationship table based on the identifier of the live broadcast clip, in which the fourth mapping relationship table is pre-stored and includes a fourth mapping relationship between the identifier of the live broadcast clip and the interactive message in the first format.

In the embodiment of the present disclosure, the fourth mapping relationship table including the fourth mapping relationship between the identifiers of multiple live clips and the corresponding interactive message in the first format is stored in advance. When obtaining the interactive message in the first format, the server may search the interactive message in the first format corresponding to the identifier of the live clip in the fourth mapping relationship table in time according to the identifier of the live clip, so as to obtain the interactive message in the first format of the live clip corresponding to the identifier of the live clip.

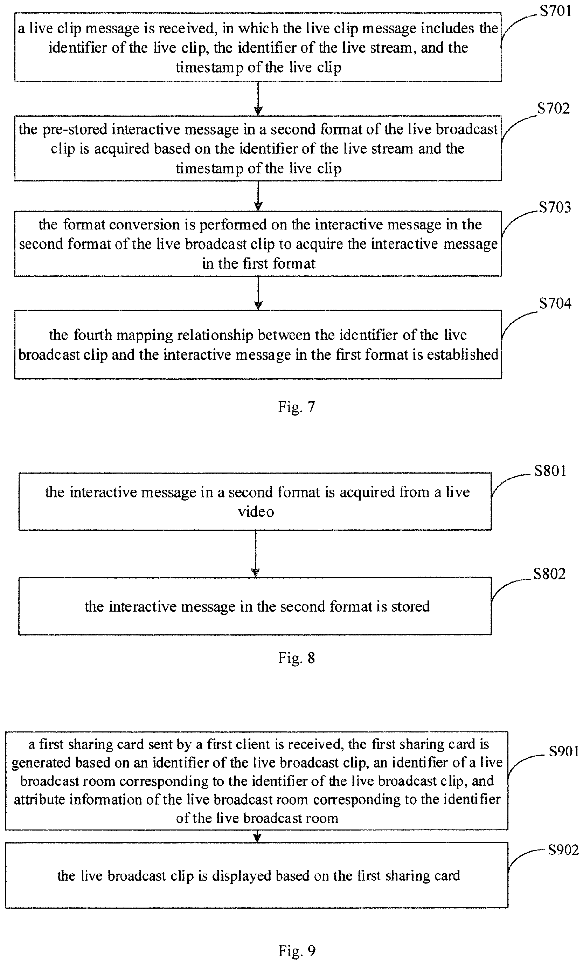

In some embodiments, as shown in Fig. 7, the method for displaying a live clip in the embodiment of the present disclosure further includes following steps S701-S704.

In step S701, a live clip message is received, in which the live clip message includes the identifier of the live clip, the identifier of the live stream, and the timestamp of the live clip.

In the embodiment of the present disclosure, the server generates a live clip message after acquiring the live clip in the live video and generating the corresponding identifier of the live clip, in which the live clip message includes the identifier of the live clip, the identifier of the live stream, and the timestamp of the live clip.

In step S702, the pre-stored interactive message in a second format of the live broadcast clip is acquired based on the identifier of the live stream and the timestamp of the live clip.

In the embodiment of the present disclosure, the server obtains the pre-stored interactive message in the second format of the live broadcast clip corresponding to the identifier of the live stream and the timestamp of the live clip according to the identifier of the live stream in the live clip message and the timestamp of the live clip.

In step S703, the format conversion is performed on the interactive message in the second format of the live broadcast clip to acquire the interactive message in the first format.

In the embodiment of the present disclosure, the format conversion is performed on the interactive message in the second format acquired in step S702 of the live broadcast clip to acquire the interactive message in the first format. Thus, the interactive message corresponding to the live broadcast clip may be displayed on clients except for the first client.

In step S704, the fourth mapping relationship between the identifier of the live broadcast clip and the interactive message in the first format is established.

In embodiments of the present disclosure, the server establishes the fourth mapping relationship between the identifier of the live broadcast clip and the interactive message in the first format acquired in the step S703.

Therefore, when receiving the first request information sent by the second client, the server may search the corresponding interactive message in the first format in the fourth mapping relationship table according to the identifier of the live clip in the first request information, such that the second client may display the live clip and the interactive message in the first format corresponding to the live clip at the same time, which enhances user experience and stickiness.

In some embodiments, as shown in Fig. 8, the method for displaying a live broadcast clip in the embodiment of the present disclosure may further include followings steps S801-S802.

In step S801, the interactive message in a second format is acquired from a live video.

In the embodiment of the present disclosure, the server obtains the interactive message in the second format in the live video in the live room, in which the interactive message in the second format includes the identifier of the live stream and the timestamp of the interactive message in the second format.

In step S802, the interactive message in the second format is stored.

In the embodiment of the present disclosure, the server stores the interactive message in the second format in a database or a cache.

As a result, the server stores the interactive message in the second format corresponding to the live clip, and the server may acquire the interactive message in the second format of the corresponding live broadcast clip according to the identifier of the live broadcast stream and the timestamp of the live broadcast clip in time when receiving the live broadcast clip.

Fig. 9 is a flowchart showing another method for displaying a live broadcast clip based on an embodiment. As shown in Fig. 9 the method for displaying a live broadcast clip can be applied to the second client and includes the following steps S901-S902.

In step S901, a first sharing card sent by a first client is received, the first sharing card is generated based on an identifier of the live broadcast clip, an identifier of a live broadcast room corresponding to the identifier of the live broadcast clip, and attribute information of the live broadcast room corresponding to the identifier of the live broadcast room.

It should be noted that the executive object of the method for displaying a live clip in the embodiments of the present disclosure is an apparatus for displaying a live clip provided in the second client provided by the embodiments of the present disclosure.

In step S902, the live broadcast clip is displayed based on the first sharing card.

In the embodiment of the present disclosure, the second client sends the first request information to the server based on the user's display operation on the first shared card, acquires the live broadcast clip corresponding to the first shared card and the interactive message in the first format, and displays the live broadcast clip.

It should be noted that the above explanation of the embodiments of the method for displaying a live clip is also applicable to the method for displaying a live clip of the embodiments of the present disclosure, and the specific process will not be repeated here.

Based on the method for displaying a live broadcast clip provided by the embodiments of the present disclosure, the second client receives the first sharing card sent by the first client, and acquire the live broadcast clip and the corresponding interactive message in the first format and the state of the anchor from the server based on the identifier of the live broadcast clip included in the first sharing card and the identifier of the live broadcast room. It realizes the real-time display of highlight live broadcast clip on clients other than the first client, and at the same time establishes the association between the live broadcast clip and the live broadcast room, which is convenient for the second client user to access the anchor's live broadcast room after finishing the display of the live broadcast clip, thus improving the user experience and the display effect.

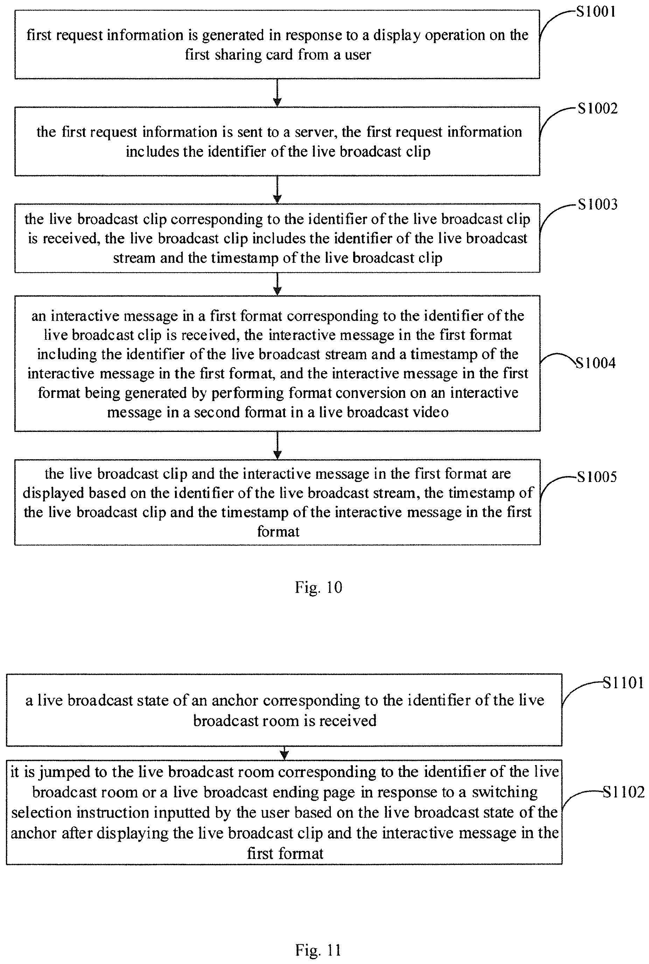

In some embodiments, as shown in Fig. 10, performing the display of the live broadcast clip based on the first sharing card in step S902 may also include followings steps S1001-S1005.

In step S1001, first request information is generated in response to a display operation on the first sharing card from a user.

In step S1002, the first request information is sent to a server, the first request information includes the identifier of the live broadcast clip.

In step S1003, the live broadcast clip corresponding to the identifier of the live broadcast clip is received, the live broadcast clip includes the identifier of the live broadcast stream and the timestamp of the live broadcast clip.

In step S1004, an interactive message in a first format corresponding to the identifier of the live broadcast clip is received, the interactive message in the first format including the identifier of the live broadcast stream and a timestamp of the interactive message in the first format, and the interactive message in the first format being generated by performing format conversion on an interactive message in a second format in a live broadcast video.

In step S1005, the live broadcast clip and the interactive message in the first format are displayed based on the identifier of the live broadcast stream, the timestamp of the live broadcast clip and the timestamp of the interactive message in the first format.

It should be noted here that the above explanation of the embodiment of the method for displaying a live broadcast clip is also applicable to the method for displaying a live broadcast clip of the embodiments of the present disclosure, and the specific process will not be repeated here.

Thus, the second client shows the user the first sharing card sent by the first client, and sends the first request information including the identifier of the live broadcast clip to the server in response to the user's display operation of the first sharing card, which is convenient for the server to acquire the corresponding live broadcast clip and the interactive message in the first format based on the identifier of the live broadcast clip. The client displays the received live broadcast clip and the interactive message in the first format based on the identifier of the live broadcast stream, the timestamp of the live broadcast clip, and the timestamp of the interactive message in the first format, and the server can respond to the request of the second client in a timely manner, so as to enable the second client to synchronously display the live broadcast clip and the interactive message in the first format, which realizes the real-time display of the highlight live broadcast clip, and through the alignment of the timestamps, the corresponding interactive message in the first format may be displayed while displaying the highlight live broadcast clip, which improves the display effect.

In some embodiments, as shown in Fig. 11, the first request information further includes the identifier of the live broadcast room, and the method for displaying a live broadcast clip in the embodiment of the present disclosure may further include followings Steps S1101-S1102.

In step S1101, a live broadcast state of an anchor corresponding to the identifier of the live broadcast room is received.

In step S1102, it is switched to the live broadcast room corresponding to the identifier of the live broadcast room or a live broadcast ending page in response to a switching selection instruction inputted by the user based on the live broadcast state of the anchor after displaying the live broadcast clip and the interactive message in the first format.

It should be noted here that the above explanation of the embodiment of the method for displaying a live broadcast clip is also applicable to the method for displaying a live broadcast clip of the embodiments of the present disclosure, and the specific process will not be repeated here.

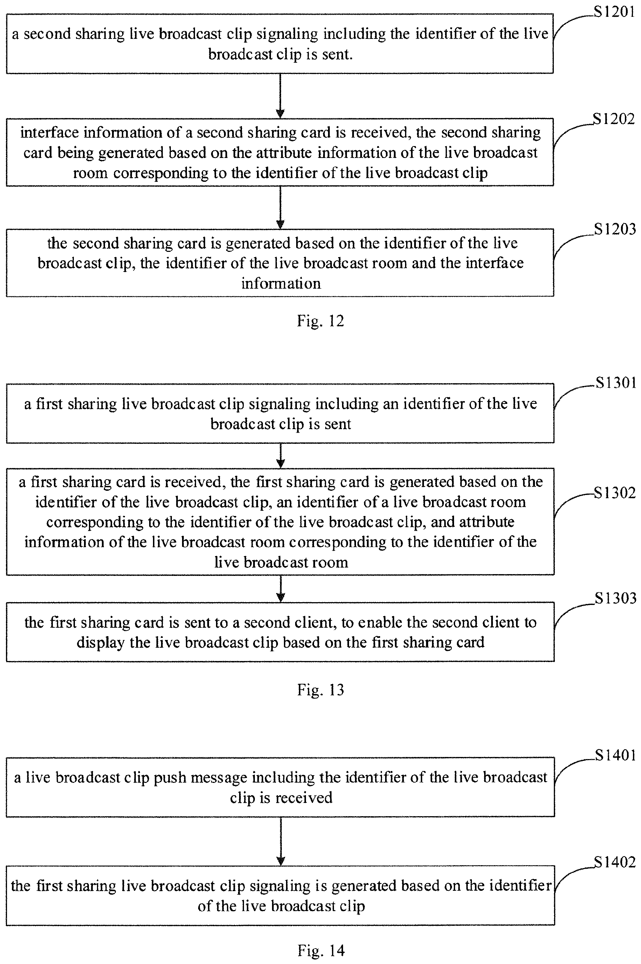

In some embodiments, as shown in Fig. 12, the method for displaying a live broadcast clip in the embodiment of the present disclosure may further include followings steps S1201-S1203.

In step S1201, a second sharing live broadcast clip signaling including the identifier of the live broadcast clip is sent.

In step S1202, interface information of a second sharing card is received, the second sharing card being generated based on the attribute information of the live broadcast room corresponding to the identifier of the live broadcast clip.

In step S1203, the second sharing card is generated based on the identifier of the live broadcast clip, the identifier of the live broadcast room and the interface information.

It should be noted here that the above explanation of the embodiment of the method for displaying a live broadcast clip is also applicable to the method for displaying a live broadcast clip of the embodiments of the present disclosure, and the specific process will not be repeated here.

In some embodiments, the first sharing card is received by the first client after sending the first live broadcast sharing fragment signaling, and the first sharing live broadcast clip signaling includes the identifier of the live broadcast clip.

Fig. 13 is a flowchart showing a method for displaying a live broadcast clip based on another embodiment. As shown in Fig. 13, the method for displaying a live broadcast clip can be applied to the first client and includes the following steps S1301-S1303.

In step S1301, a first sharing live broadcast clip signaling including an identifier of the live broadcast clip is sent.

It should be noted that the execution body of the method for displaying a live broadcast clip in the embodiments of the present disclosure is the apparatus for displaying a live broadcast clip provided on the first client provided by the embodiments of the present disclosure.

In step S1302, a first sharing card is received, the first sharing card is generated based on the identifier of the live broadcast clip, an identifier of a live broadcast room corresponding to the identifier of the live broadcast clip, and attribute information of the live broadcast room corresponding to the identifier of the live broadcast room.

In step S1303, the first sharing card is sent to a second client, to enable the second client to display the live broadcast clip based on the first sharing card.

It should be noted here that the above explanation of the embodiment of the method for displaying a live broadcast clip is also applicable to the method for displaying a live broadcast clip of the embodiments of the present disclosure, and the specific process will not be repeated here.

In the method for displaying a live broadcast clip provided by the embodiments of the present disclosure, the first client sends the first sharing live broadcast clip signaling to the server to acquire the first shared card, and sends the first shared card to the second client, so that the second client may display the live broadcast clip based on the first sharing card, thereby realizing the off-site display of the live broadcast clip, and expanding the display range of the wonderful live broadcast clip.

In some embodiments, as shown in Fig. 14, the method for displaying a live broadcast clip in the embodiment of the present disclosure may further include followings S1401-S1402.

In step S1401, a live broadcast clip push message including the identifier of the live broadcast clip is received.

In step S1402, the first sharing live broadcast clip signaling is generated based on the identifier of the live broadcast clip.

It should be noted here that the above explanation of the embodiment of the method for displaying a live broadcast clip is also applicable to the method for displaying a live broadcast clip of the embodiments of the present disclosure, and the specific process will not be repeated here.

In some embodiments, the identifier of the live broadcast room corresponding to the identifier of the live broadcast clip is retrieved from the first mapping relationship table stored in advance based on the identifier of the live broadcast clip, in which the first mapping relationship table includes the first mapping relationship between the identifier of the live broadcast room and the identifier of the live broadcast room.

In some embodiments, the attribute information of the live broadcast room corresponding to the identifier of the live broadcast room is retrieved in a second mapping relationship table stored in advance based on the identifier of the live broadcast room, in which the second mapping relationship table includes the second mapping relationship between the identifier of the live broadcast room and the attribute information of the live broadcast room.

It should be noted here that the above explanation of the embodiment of the method for displaying a live broadcast clip is also applicable to the method for displaying a live broadcast clip of the embodiments of the present disclosure, and the specific process will not be repeated here.

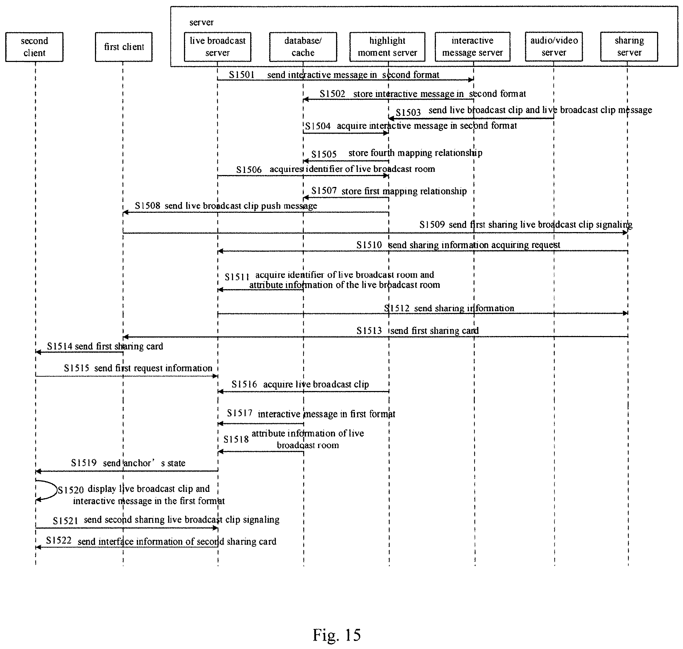

In order to clearly illustrate the method for displaying a live clip in the embodiments of the present disclosure, a detailed description will be given below with reference to Fig. 15.

Fig. 15 is a signaling interaction diagram showing a method for displaying a live clip according to an embodiment. As shown in Fig. 15, taking the server including a live broadcast server, a highlight moment server, an interactive message server, and audio/video server, a sharing server as an example, the method for displaying a live clip in the embodiments of the present disclosure may specifically include the following steps S1501-S1522.

In step S1501, a live broadcast server sends an interactive message in a second format in a live video in a live room to an interactive message server, in which the interactive message in the second format includes an identifier of a live stream and a timestamp of the interactive message in the second format.

In step S1502, the interactive message server receives the interactive message in the second format, and stores the interactive message in the second format in a database or a cache.

In step S1503, an audio/video server obtains the live clip in the live video in the live room, and generates the corresponding identifier of the live clip, establishes and stores a third mapping relationship between an identifier of the live clip and the live clip, and sends the live clip and a live clip message to a highlight moment server, in which the live clip message includes the identifier of the live clip, an identifier of the live stream, and a timestamp of the live clip.

In step S1504, the highlight moment server obtains the corresponding interactive message in the second format from the database or cache according to the identifier of the live stream and the timestamp of the live clip in the live clip message.

In step S1505, a highlight moment server converts the interactive message in the second format into the interactive message in the first format, and establishes a fourth mapping relationship between the identifier of the live broadcast clip and the interactive message in the first format, and stores the fourth mapping relationship in a database or a cache.

In step S1506, the highlight moment server acquires the identifier of the live broadcast room from the live broadcast server.

In step S1507, a first mapping relationship between the identifier of the live broadcast clip and the identifier of the live broadcast room is established and stored in a database or a cache.

In step S1508, the highlight moment server sends a live broadcast clip push message to the first client, in which the live broadcast clip push message includes the identifier of the live broadcast clip.

In step S1509, the first client sends a first sharing live broadcast clip signaling to the sharing server in response to a user's sharing operation, in which the first sharing live broadcast clip signaling includes the identifier of the live broadcast clip.

In step S1510, the sharing server sends a sharing information acquiring request to the live broadcast server, in which the sharing information acquiring request includes the identifier of the live broadcast clip.

In step S1511, the live broadcast server acquires the identifier of the corresponding live broadcast room from the database or cache based on the identifier of the live broadcast clip and the first mapping relationship table, and acquires the attribute information of the live broadcast room from the database and the cache based on the identifier of the live broadcast room and the second mapping relationship table.

In step S1512, the live broadcast server sends the sharing information to the sharing server, in which the sharing server includes the identifier of the live broadcast room and the attribute information of the live broadcast room.

In step S1513, the sharing server generates a first sharing card based on the identifier of the live broadcast clip in the first sharing live broadcast clip signaling, the identifier of the live broadcast room in the sharing information, and the attribute information of the live broadcast room, and sends the first sharing card to the first client.

In step S1514, the first client sends the first sharing card to the second client.

In step S 1515, the second client generates first request information and sends it to the live broadcast server in response to a user's display operation on the first sharing card, in which the first request information includes the identifier of the live broadcast clip and the identifier of the live broadcast room.

In step S1516, the live broadcast server acquires the live broadcast clip from the highlight moment server based on the identifier of the live broadcast clip and the third mapping relationship table.

In step S1517, the live broadcast server acquires the corresponding interactive message in the first format from the database or the cache based on the identifier of the live broadcast clip and the fourth mapping relationship.

In step S 1518, the live broadcast server acquires the attribute information of the corresponding live broadcast room from the database and the cache based on the identifier of the live broadcast room and the second mapping relationship.

In step S1519, the live broadcast server acquires information of an anchor in the corresponding live broadcast room from the database or cache based on the identifier of the live broadcast room, determines a live broadcast state of the anchor based on the information of the anchor, and sends the state to the second client, so as to enable the second client to jump to the live broadcast room or the live broadcast end page corresponding to the identifier of the live broadcast room in response to the jump instruction input by the user based on the state of the anchor after the display of the live broadcast clip and the corresponding interactive message in the first format.

In step S1520, the second client terminal displays the live broadcast clip and the interactive message in the first format based on the identifier of the live broadcast stream, the timestamp of the live broadcast clip, and the timestamp of the interactive message in the first format.

In step S1521, the second client sends a second sharing live broadcast clip signaling to the live broadcast server in response to a user's sharing operation, in which the second shared live broadcast clip signaling includes the identifier of the live broadcast clip.

In step S1522, the live broadcast server acquires the attribute information of the live broadcast room corresponding to the identifier of the live broadcast clip from the database, generates the interface information of the second sharing card based on the attribute information of the live broadcast room, and sends the interface information of the second sharing card to the second client, so as to enable the second client to generate a second sharing card based on the identifier of the live broadcast clip, the identifier of the live broadcast room, and the interface information.

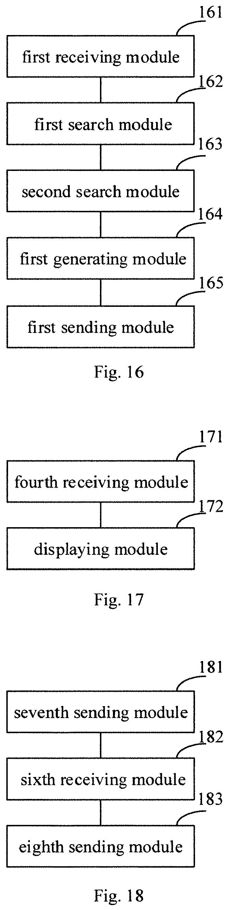

Fig. 16 is a block diagram showing an apparatus for displaying a live broadcast clip based on an embodiment. Referring to Fig. 16, the apparatus is applied to a server, and includes a first receiving module 161, a first search module 162, a second search module 163, a first generating module 164, and a first sending module 165.

The first receiving module 161 is configured to receive a first sharing live broadcast clip signaling sent by a first client, the first sharing live broadcast clip signaling including an identifier of the live broadcast clip.

The first search module 162 is configured to search an identifier of a live broadcast room in a first mapping relationship table based on the identifier of the live broadcast clip, in which the first mapping relationship table is pre-stored and includes a first mapping relationship between the identifier of the live broadcast clip and the identifier of the live broadcast room.

The second search module 163 is configured to search attribute information of the live broadcast room in a second mapping relationship table based on the identifier of the live broadcast room, in which the second mapping relationship table is pre-stored and includes a second mapping relationship between the identifier of the live broadcast room and the attribute information of the live broadcast room.

The first generating module 164 is configured to generate a first sharing card based on the identifier of the live broadcast clip, the identifier of the live broadcast room, and the attribute information of the live broadcast room.

The first sending module 165 is configured to send the first sharing card to the first client, the first sharing card is configured to share the live broadcast clip to a second client to enable the second client to display the live broadcast clip based on the first sharing card.

In an embodiment of the present disclosure, the apparatus for displaying a live broadcast clip further includes: a second receiving module, configured to receive first request information sent by the second client, the first request information including the identifier of the live broadcast clip, and the first request information being generated by the second client in response to a display operation for the first sharing card; a first acquiring module, configured to acquire the live broadcast clip corresponding to the identifier of the live broadcast clip, the live broadcast clip including an identifier of a live broadcast stream and a timestamp of the live broadcast clip; a second acquiring module, configured to acquire an interactive message in a first format corresponding to the identifier of the live broadcast clip, the interactive message in the first format including the identifier of the live broadcast stream and a timestamp of the interactive message in the first format, and the interactive message in the first format being generated by performing format conversion on an interactive message in a second format in a live broadcast video; and a second sending module, configured to send the live broadcast clip and the interactive message in the first format to the second client, to enable the second client to display the live broadcast clip and the interactive message in the first format based on the identifier of the live broadcast stream, the timestamp of the live broadcast clip and the timestamp of the interactive message in the first format.

In an embodiment of the present disclosure, first request information further includes the identifier of the live broadcast room, and the apparatus includes: a third acquiring module, configured to acquire information on an anchor corresponding to the live broadcast room based on the identifier of the live broadcast room; a determining module, configured to determine a live broadcast state of the anchor based on the information on the anchor; a third sending module, configured to send the live broadcast state of the anchor to the second client, to enable the second client to switch to the live broadcast room corresponding to the identifier of the live broadcast room or a live broadcast ending page in response to a switching selection instruction inputted by the user based on the live broadcast state of the anchor after displaying the live broadcast clip and the interactive message in the first format.

In an embodiment of the present disclosure, the apparatus for displaying a live broadcast clip may further include: a third receiving module, configured to receive a second sharing live broadcast clip signaling sent by the second client, the second sharing live broadcast clip signaling including the identifier of the live broadcast clip; a second generating module, configured to generate interface information of a second sharing card based on the attribute information of the live broadcast room corresponding to the identifier of the live broadcast clip; and a fourth sending module, configured to send the interface information of the second sharing card to the second client, to enable the second client to generate the second sharing card based on the identifier of the live broadcast clip, the identifier of the live broadcast room and the interface information.

In an embodiment of the present disclosure, the apparatus for displaying live broadcast clips may further include: a fifth sending module, configured to send a live broadcast clip push message including the identifier of the live broadcast clip to the first client, to enable the first client to generate the first sharing live broadcast clip signaling based on the identifier of the live broadcast clip.

In an embodiment of the present disclosure, the first acquiring module includes: a first searching unit, configured to search the live broadcast clip in a third mapping relationship table based on the identifier of the live broadcast clip, in which the third mapping relationship table is pre-stored and includes a third mapping relationship between the identifier of the live broadcast clip and the live broadcast clip.

In an embodiment of the present disclosure, the apparatus for displaying a live broadcast clip may further include: a first acquiring unit, configured to acquire the live broadcast clip in the live broadcast video; a first generating unit, configured to generate the identifier of the live broadcast clip; and a first establishing unit, configured to establish the third mapping relationship between the identifier of the live broadcast clip and the live broadcast clip.

In an embodiment of the present disclosure, the apparatus for displaying a live broadcast clip may further include: a second acquiring unit, configured to acquire the identifier of the live broadcast room corresponding to the live broadcast video; a second establishing unit, configured to establish the first mapping relationship between the identifier of the live broadcast clip and the identifier of the live broadcast room.

In an embodiment of the present disclosure, the second acquiring module includes: a second searching unit, configured to search the interactive message in the first format in a fourth mapping relationship table based on the identifier of the live broadcast clip, in which the fourth mapping relationship table is pre-stored and includes a fourth mapping relationship between the identifier of the live broadcast clip and the interactive message in the first format.

In an embodiment of the present disclosure, the apparatus for displaying live broadcast clips may further include: a first receiving unit, configured to receive a live broadcast clip message including the identifier of the live broadcast clip, the identifier of the live broadcast stream, and the timestamp of the live broadcast clip; a third acquiring unit, configured to acquire the interactive message in the second format of the live broadcast clip based on the identifier of the live broadcast stream and the timestamp of the live broadcast clip; a converting unit, configured to perform the format conversion on the interactive message in the second format of the live broadcast clip to acquire the interactive message in the first format; a third establishing unit, configured to establish the fourth mapping relationship between the identifier of the live broadcast clip and the interactive message in the first format.

In an embodiment of the present disclosure, the apparatus for displaying a live broadcast clip may further include: a fourth acquiring unit, configured to acquire the interactive message in the second format in the live broadcast video; and a storing unit, configured to store the interactive message in the second format.

Regarding the apparatus in the foregoing embodiment, the specific manner in which each module performs the operation has been described in detail in the embodiment of the method, and a detailed description will not be given here.

Based on the apparatus for displaying a live broadcast clip provided by the embodiments of the present disclosure, the server acquires the identifier of the live broadcast room corresponding to the identifier of the live broadcast clip based on the identifier of the live broadcast clip in the first live broadcast sharing signaling sent by the first client, and acquires the attribute information of the live broadcast room based on the identifier of the live broadcast room, generates the first sharing card and sends it to the first client. Therefore, the users may send the first sharing card to the second client based on their needs, so that the second client can display the live broadcast clip based on the first sharing card, so as to realize the sharing of the live broadcast clip among different clients and expand the display range of the live broadcast clip.

Fig. 17 is a block diagram showing an apparatus for displaying a live broadcast clip based on an embodiment. Referring to Fig. 17, the apparatus is applied to a second client and includes a fourth receiving module 171 and a displaying module 172.

The fourth receiving module 171 is configured to receive a first sharing card sent by a first client, the first sharing card being generated based on an identifier of the live broadcast clip, an identifier of a live broadcast room corresponding to the identifier of the live broadcast clip, and attribute information of the live broadcast room corresponding to the identifier of the live broadcast room.

The displaying module 172 is configured to display the live broadcast clip based on the first sharing card.

In an embodiment of the present disclosure, the displaying module 172 includes: a second generating unit, configured to generate first request information in response to a display operation on the first sharing card from a user; a sending unit, configured to send the first request information to a server, the first request information includes the identifier of the live broadcast clip; a second receiving unit, configured to receive the live broadcast clip corresponding to the identifier of the live broadcast clip, the live broadcast clip including the identifier of the live broadcast stream and the timestamp of the live broadcast clip; a third receiving unit, configured to receive an interactive message in a first format corresponding to the identifier of the live broadcast clip, the interactive message in the first format including the identifier of the live broadcast stream and a timestamp of the interactive message in the first format, and the interactive message in the first format being generated by performing format conversion on an interactive message in a second format in a live broadcast video; and a displaying unit, configured to display the live broadcast clip and the interactive message in the first format based on the identifier of the live broadcast stream, the timestamp of the live broadcast clip and the timestamp of the interactive message in the first format.

In an embodiment of the present disclosure, the first request information further includes the identifier of the live broadcast room, and the apparatus includes: a fourth receiving unit, configured to receive a live broadcast state of an anchor corresponding to the identifier of the live broadcast room; and a switching unit, configured to switch to the live broadcast room corresponding to the identifier of the live broadcast room or a live broadcast ending page in response to a switching selection instruction inputted by the user based on the live broadcast state of the anchor after displaying the live broadcast clip and the interactive message in the first format.

In an embodiment of the present disclosure, the apparatus for displaying a live broadcast clip may further include: a sixth sending module, configured to send a second sharing live broadcast clip signaling including the identifier of the live broadcast clip; a fifth receiving module, configured to receive interface information of a second sharing card, the second sharing card being generated based on the attribute information of the live broadcast room corresponding to the identifier of the live broadcast clip; and a third generating module, configured to generate the second sharing card based on the identifier of the live broadcast clip, the identifier of the live broadcast room and the interface information.

In an embodiment of the present disclosure, the first sharing card is received after the first client sending the first sharing live broadcast clip signaling, and the first sharing live broadcast clip signaling includes the identifier of the live broadcast clip.

Regarding the apparatus in the foregoing embodiment, the specific manner in which each module performs the operation has been described in detail in the embodiment of the method, and a detailed description will not be given here.

In the apparatus for displaying a live broadcast clip provided by the embodiments of the present disclosure, the second client displays the first shared card sent by the first client to the user, and sends the first request information containing the identifier of the live broadcast clip to the server in response to the user's display operation on the first shared card, so that the server can acquire the corresponding live broadcast clip and the interactive message in the first format based on the identifier of the live broadcast clip, so as to enable the client to display the received live broadcast clip and the interactive message in the first format based on the identifier of the live broadcast stream, the timestamp of the live broadcast clip, and the timestamp of the interactive message in the first format, and the server can respond to the second client in a timely manner, such that the second client may synchronously display the live broadcast clip and the interactive message in the first format, which realizes the real-time display of the highlight live broadcast clip, and through the alignment of the timestamps, the highlight live broadcast clip may be displayed while displaying the corresponding interactive message in the first format, which improves the display effect and expands the display range of the live broadcast clip.

Fig. 18 is a block diagram showing an apparatus for displaying live broadcast clips based on another embodiment. Referring to Fig. 18, the apparatus is applied to a first client and includes a seventh sending module 181, a sixth receiving module 182, and an eighth sending module 183.

The seventh sending module 181 is configured to send a first sharing live broadcast clip signaling including an identifier of the live broadcast clip.

The sixth receiving module 182 is configured to receive a first sharing card, the first sharing card being generated based on the identifier of the live broadcast clip, an identifier of a live broadcast room corresponding to the identifier of the live broadcast clip, and attribute information of the live broadcast room corresponding to the identifier of the live broadcast room.

The eighth sending module 183 is configured to send the first sharing card to a second client, to enable the second client to display the live broadcast clip based on the first sharing card.

In an embodiment of the present disclosure, the apparatus for displaying a live broadcast clip may further include: a seventh receiving module, configured to receive a live broadcast clip push message including the identifier of the live broadcast clip; and a fourth generating module, configured to generate the first sharing live broadcast clip signaling based on the identifier of the live broadcast clip.

In an embodiment of the present disclosure, the identifier of the live broadcast room corresponding to the identifier of the live broadcast clip is searched in a first mapping relationship table pre-stored based on the identifier of the live broadcast clip, and the first mapping relationship table includes a first mapping relationship between the identifier of the live broadcast clip and the identifier of the live broadcast room.

In an embodiment of the present disclosure, the attribute information of the live broadcast room corresponding to the identifier of the live broadcast room is searched in a second mapping relationship table pre-stored based on the identifier of the live broadcast room, and the second mapping relationship table includes a second mapping relationship between the identifier of the live broadcast room and the attribute information of the live broadcast room.

Regarding the apparatus in the foregoing embodiment, the specific manner in which each module performs the operation has been described in detail in the embodiment of the method, and a detailed description will not be given here.

In the apparatus for displaying a live broadcast clip provided by the embodiments of the present disclosure, the first client sends the first sharing live broadcast clip signaling to the server to acquire the first sharing card, and sends the first sharing card to the second client, so that the first sharing card is sent to the second client. The second client can display the live broadcast clip based on the first shared card, thereby realizing the off-site display of the live broadcast clip, and expanding the display range of the highlight live broadcast clip.

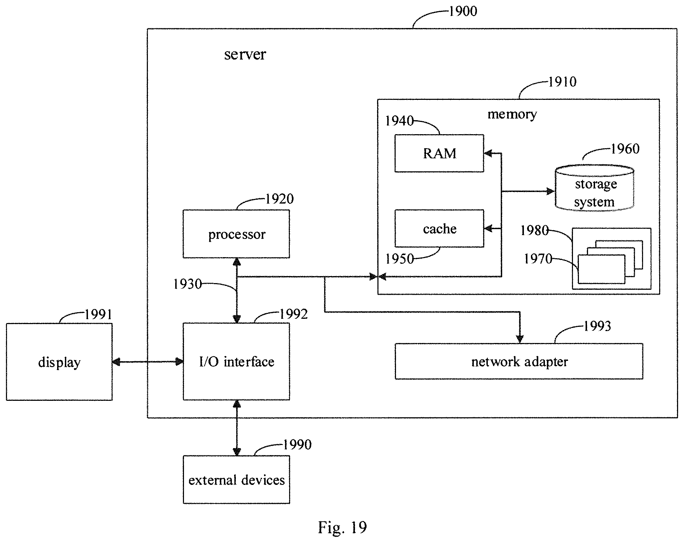

Fig. 19 is a block diagram showing an electronic device 1900 for displaying a live broadcast clip based on an embodiment. Referring to Fig. 19, the electronic device 1900 includes a memory 1910, a processor 1920, a bus 1930 connecting different components (including the memory 1910 and the processor 1920). The memory 1910 stores a computer program. When the processor 1920 executes the program, the method for displaying a live broadcast clip in the embodiment of the present disclosure is implemented.

The bus 1930 represents one or more of several types of bus structures, including a memory bus or a memory controller, a peripheral bus, a graphics acceleration port, a processor, or a local bus using any bus structure among multiple bus structures. For example, these architectures include but are not limited to industry standard architecture (ISA) bus, microchannel architecture (MAC) bus, enhanced ISA bus, Video Electronics Standards Association (VESA) local bus, and peripheral component interconnection (PCI) bus.

The electronic device 1900 typically includes a variety of electronic device-readable medium. These medium may be any available medium that may be accessed by the electronic device 1900, including volatile and nonvolatile medium, removable and non-removable medium.

The memory 1910 may also include a computer system readable medium in the form of a volatile memory, such as a random access memory (RAM) 1940 and/or a cache memory 1950. The electronic device 1900 may further include other removable/non-removable, volatile/nonvolatile computer system storage medium. For example, the storage system 1960 may be used to read and write non-removable, non-volatile magnetic medium (not shown in Fig. 19 and generally referred to as a "hard drive"). Although not shown in Fig. 19, a disk drive for reading and writing to a removable non-volatile disk (such as a "floppy disk"), and a removable non-volatile optical disk (such as CD-ROM, DVD-ROM) may be provided. Or other optical medium) read and write optical disc drives. In these cases, each drive may be connected to the bus 1930 through one or more data medium interfaces. The memory 1910 may include at least one program product, the program product having a set (for example, at least one) of program modules, and these program modules are configured to perform the functions of the various embodiments of the present disclosure.

A program/utility tool 1980 having a set of (at least one) program module 1970 may be stored in, for example, the memory 1910. Such program module 1970 includes but is not limited to an operating system, one or more application programs, other program modules, and program data Each of these examples or some combination may include the implementation of a network environment. The program module 1970 generally executes the functions and/or methods in the embodiments described in the present disclosure.

The electronic device 1900 may also communicate with one or more external devices 1990 (such as a keyboard, pointing device, display 891, etc.), and may also communicate with one or more devices that enable a user to interact with the electronic device 1900, and/or communicate with any device (such as a network card, modem, etc.) that enables the electronic device 1900 to communicate with one or more other computing devices. This communication may be performed through an input/output (I/O) interface 1592. In addition, the electronic device 1900 may also communicate with one or more networks (for example, a local area network (LAN), a wide area network (WAN), and/or a public network, such as the Internet) through the network adapter 1593. As shown in Fig. 19, the network adapter 1993 communicates with other modules of the electronic device 1900 through the bus 1930. It should be understood that although not shown in the figure, other hardware and/or software modules may be used in conjunction with the electronic device 1900, including but not limited to: microcode, device drivers, redundant processing units, external disk drive arrays, RAID systems, tape drives and data backup storage system, etc.

The processor 1920 executes various functional applications and data processing by running programs stored in the memory 1910.

It should be noted that, for the implementation process and technical principle of the electronic device of this embodiment, please refer to the foregoing explanation of the video recommendation method of the embodiment of the present disclosure, which will not be repeated here.

The electronic device proposed in the embodiments of the present disclosure may execute the method for displaying a live broadcast clip. The server acquires the identifier of the live broadcast room corresponding to the identifier of the live broadcast clip based on the identifier of the live broadcast clip in the first live broadcast sharing signaling sent by the first client, and acquires the attribute information of the live broadcast room based on the identifier of the live broadcast room, generates the first sharing card and sends it to the first client. Therefore, the users may send the first sharing card to the second client based on their needs, so that the second client can display the live broadcast clip based on the first sharing card, and at the same time, the user of the second client may acquire the interface information of the second sharing card by sending the second sharing live broadcast clip signaling to the server, so as to realize the sharing of the live broadcast clip among different clients and expand the display range of the live broadcast clip.

In order to implement the foregoing embodiments, the present disclosure also proposes a computer-readable storage medium including instructions, such as a memory 1910 including instructions, which may be executed by the processor 1920 of the electronic device 1900 to complete the foregoing method. Alternatively, the computer-readable storage medium may be ROM, random access memory (RAM), CD-ROM, magnetic tape, floppy disk, optical data storage device, etc.

In order to implement the foregoing embodiments, the present disclosure also proposes a computer program product, including a computer program, which implements the foregoing method when the computer program is executed by the processor 1920 of the electronic device 1900.

Those skilled in the art will easily think of other embodiments of the present disclosure after considering the specification and practicing the invention disclosed herein. This application is intended to cover any variations, uses, or adaptive changes of the present disclosure. These variations, uses, or adaptive changes follow the general principles of the present disclosure and include common knowledge or conventional technical means in the technical field that are not disclosed in the present disclosure. The description and the embodiments are to be regarded as exemplary only, and the true scope and spirit of the present disclosure are pointed out by the following claims.

## Claims

1. A method for displaying a live broadcast clip, comprising:
receiving (S101) a first sharing live broadcast clip signaling sent by a first client, the first sharing live broadcast clip signaling comprising an identifier of the live broadcast clip;
searching (S102) an identifier of a live broadcast room in a first mapping relationship table based on the identifier of the live broadcast clip, wherein the first mapping relationship table is pre-stored and comprises a first mapping relationship between the identifier of the live broadcast clip and the identifier of the live broadcast room;
searching (S 103) attribute information of the live broadcast room in a second mapping relationship table based on the identifier of the live broadcast room, wherein the second mapping relationship table is pre-stored and comprises a second mapping relationship between the identifier of the live broadcast room and the attribute information of the live broadcast room;
generating (S 104) a first sharing card based on the identifier of the live broadcast clip, the identifier of the live broadcast room, and the attribute information of the live broadcast room; and
sending (S105) the first sharing card to the first client, the first sharing card being configured to share the live broadcast clip to a second client to enable the second client to display the live broadcast clip based on the first sharing card.

2. The method of claim 1, further comprising:
receiving (S201) first request information sent by the second client, the first request information comprising the identifier of the live broadcast clip, and the first request information being generated by the second client in response to a display operation for the first sharing card;
acquiring (S202) the live broadcast clip corresponding to the identifier of the live broadcast clip, the live broadcast clip comprising an identifier of a live broadcast stream and a timestamp of the live broadcast clip;
acquiring (S203) an interactive message in a first format corresponding to the identifier of the live broadcast clip, the interactive message in the first format comprising the identifier of the live broadcast stream and a timestamp of the interactive message in the first format, and the interactive message in the first format being generated by performing format conversion on an interactive message in a second format in a live broadcast video; and
sending (S204) the live broadcast clip and the interactive message in the first format to the second client, to enable the second client to display the live broadcast clip and the interactive message in the first format based on the identifier of the live broadcast stream, the timestamp of the live broadcast clip and the timestamp of the interactive message in the first format.

3. The method of claim 2, wherein the first request information further comprises the identifier of the live broadcast room, and the method comprises:
acquiring (S301) information on an anchor corresponding to the live broadcast room based on the identifier of the live broadcast room;
determining (S302) a live broadcast state of the anchor based on the information on the anchor; sending (S303) the live broadcast state of the anchor to the second client, to enable the second client to switch to the live broadcast room corresponding to the identifier of the live broadcast room or a live broadcast ending page in response to a switching selection instruction inputted by a user based on the live broadcast state of the anchor after displaying the live broadcast clip and the interactive message in the first format.

4. The method of any of claims 1 to 3, further comprising:
receiving (S401) a second sharing live broadcast clip signaling sent by the second client, the second sharing live broadcast clip signaling comprising the identifier of the live broadcast clip;
generating (S402) interface information of a second sharing card based on the attribute information of the live broadcast room corresponding to the identifier of the live broadcast clip; and
sending (S403) the interface information of the second sharing card to the second client, to enable the second client to generate the second sharing card based on the identifier of the live broadcast clip, the identifier of the live broadcast room and the interface information.

5. The method of any of claims 1 to 4, further comprising:
sending a live broadcast clip push message comprising the identifier of the live broadcast clip to the first client, to enable the first client to generate the first sharing live broadcast clip signaling based on the identifier of the live broadcast clip.

6. The method of any of claims 2 to 5, wherein acquiring the live broadcast clip corresponding to the identifier of the live broadcast clip comprises:
searching the live broadcast clip in a third mapping relationship table based on the identifier of the live broadcast clip, wherein the third mapping relationship table is pre-stored and comprises a third mapping relationship between the identifier of the live broadcast clip and the live broadcast clip.

7. The method of claim 6, further comprising:
acquiring (S501) the live broadcast clip in the live broadcast video;
generating (S502) the identifier of the live broadcast clip;
establishing (S503) the third mapping relationship between the identifier of the live broadcast clip and the live broadcast clip.

8. The method of claim 7, further comprising:
acquiring (S601) the identifier of the live broadcast room corresponding to the live broadcast video;
establishing (S602) the first mapping relationship between the identifier of the live broadcast clip and the identifier of the live broadcast room.

9. The method of any of claims 2 to 8, wherein acquiring the interactive message corresponding to the identifier of the live broadcast clip comprises:
searching the interactive message in the first format in a fourth mapping relationship table based on the identifier of the live broadcast clip, wherein the fourth mapping relationship table is pre-stored and comprises a fourth mapping relationship between the identifier of the live broadcast clip and the interactive message in the first format.

10. The method of claim 9, further comprising:
receiving (S701) a live broadcast clip message comprising the identifier of the live broadcast clip, the identifier of the live broadcast stream, and the timestamp of the live broadcast clip;
acquiring (S702) the interactive message in the second format of the live broadcast clip based on the identifier of the live broadcast stream and the timestamp of the live broadcast clip;
performing (S703) the format conversion on the interactive message in the second format of the live broadcast clip to acquire the interactive message in the first format;
establishing (S704) the fourth mapping relationship between the identifier of the live broadcast clip and the interactive message in the first format.

11. The method of claim 10, further comprising:
acquiring (S801) the interactive message in the second format in the live broadcast video; and
storing (S802) the interactive message in the second format.

12. A method for displaying a live broadcast clip, comprising:
receiving (S901) a first sharing card sent by a first client, the first sharing card being generated based on an identifier of the live broadcast clip, an identifier of a live broadcast room corresponding to the identifier of the live broadcast clip, and attribute information of the live broadcast room corresponding to the identifier of the live broadcast room;
displaying (S902) the live broadcast clip based on the first sharing card.

13. A method for displaying a live broadcast clip, comprising:
sending (S1301) a first sharing live broadcast clip signaling comprising an identifier of the live broadcast clip;
receiving (S1302) a first sharing card, the first sharing card being generated based on the identifier of the live broadcast clip, an identifier of a live broadcast room corresponding to the identifier of the live broadcast clip, and attribute information of the live broadcast room corresponding to the identifier of the live broadcast room; and
sending (S1303) the first sharing card to a second client, to enable the second client to display the live broadcast clip based on the first sharing card.

14. An apparatus for displaying a live broadcast clip, comprising:
a first receiving module (161), configured to receive a first sharing live broadcast clip signaling sent by a first client, the first sharing live broadcast clip signaling comprising an identifier of the live broadcast clip;
a first search module (162), configured to search an identifier of a live broadcast room in a first mapping relationship table based on the identifier of the live broadcast clip, wherein the first mapping relationship table is pre-stored and comprises a first mapping relationship between the identifier of the live broadcast clip and the identifier of the live broadcast room;
a second search module (163), configured to search attribute information of the live broadcast room in a second mapping relationship table based on the identifier of the live broadcast room, wherein the second mapping relationship table is pre-stored and comprises a second mapping relationship between the identifier of the live broadcast room and the attribute information of the live broadcast room;
a first generating module (164), configured to generate a first sharing card based on the identifier of the live broadcast clip, the identifier of the live broadcast room, and the attribute information of the live broadcast room; and
a first sending module (165), configured to send the first sharing card to the first client, the first sharing card is configured to share the live broadcast clip to a second client to enable the second client to display the live broadcast clip based on the first sharing card.

15. An apparatus for displaying a live broadcast clip, comprising:
a fourth receiving module (171), configured to receive a first sharing card sent by a first client, the first sharing card being generated based on an identifier of the live broadcast clip, an identifier of a live broadcast room corresponding to the identifier of the live broadcast clip, and attribute information of the live broadcast room corresponding to the identifier of the live broadcast room;
a displaying module (172), configured to display the live broadcast clip based on the first sharing card.
